# EUROPÄISCHE PATENTSCHRIFT

(11) **EP 4 504 490 B1**
(45) Veröffentlichungstag und Bekanntmachung des Hinweises auf die Patenterteilung: **06.05.2026**
(21) Anmeldenummer: 23701072.3
(22) Anmeldetag: 17.01.2023
(51) Int. Cl.: B29C 51/42, B29C 51/06, B29K 29/00, B29L 25/00, B29L 31/00, B65B 3/02, B29C 51/10

(54) **HEIZVORRICHTUNG ZUR HERSTELLUNG VON WASCHMITTELDOSIEREINHEITEN MIT VERBESSERTEN EIGENSCHAFTEN**
HEATING DEVICE
DISPOSITIF DE CHAUFFAGE

(30) Priorität: 04.04.2022 EP 22166466
(43) Veröffentlichungstag der Anmeldung: 12.02.2025
(73) Patentinhaber: Henkel AG & Co. KGaA, 40589 Düsseldorf (DE)
(72) Erfinder: TREBBE, Uwe, 40547 Düsseldorf (DE); SIEPLER, Niklas, 42327 Wuppertal (DE)
(86) Internationale Anmeldenummer: PCT/EP2023/051001
(87) Internationale Veröffentlichungsnummer: WO 2023/193964

(56) Entgegenhaltungen:
- EP-A1- 1 375 637
- EP-A1- 3 738 751
- EP-A2- 0 055 082
- EP-B1- 3 078 478
- DE-A1- 2 019 295
- US-A1- 2018 282 672
- US-A1- 2022 081 656

## Beschreibung

Die vorliegende Erfindung betrifft eine Vorrichtung zum Erwärmen von Verpackungsfilmen, insbesondere zum Erwärmen von Verpackungsfilmen im Rahmen von Tiefziehverfahren.

An die Konfektions- und Angebotsformen von Konsumgütern werden sich kontinuierlich ändernde Anforderungen gestellt. Im Bereich der Wasch- oder Reinigungsmittel liegt beispielsweise seit geraumer Zeit ein Augenmerk auf deren bequemer Dosierung durch den Verbraucher und der Vereinfachung der zur Durchführung eines Wasch- oder Reinigungsverfahreng notwendigen Arbeitsschritte. Eine technische Lösung bieten vorportionierte Wasch- oder Reinigungsmittel, beispielsweise Folienbeutel mit einer oder mehreren Aufnahmekammern für feste oder flüssige Wasch- oder Reinigungsmittel.

Ein für die Herstellung dieser Folienbeutel relevanter Trend, ist die Miniaturisierung dieser Folienbeutel. Hintergrund dieser Entwicklung sind neben einer höheren Verbraucherakzeptanz aufgrund vereinfachter Handhabung insbesondere Nachhaltigkeitsaspekte, beispielsweise in Bezug auf die Menge der eingesetzten Verpackungsmittel.

Die Herstellung der zuvor beschriebenen Folienbeutel erfolgt durch mehrstufige Prozesse, in deren Verlauf wasserlösliche Folienmaterialien beispielsweise durch Einwirkung von Wärme und Unterdruck in Kavitäten eingeformt, befüllt und nachfolgend versiegelt werden. Während die Erwärmung der Folien deren Plastizität erhöht, bewirkt die aus dem an die erwärmte Folie angelegten Unterdruck resultierende Kraft deren Streckung und plastische Verformung. Der Film wird in diesem Heizvorrichtung über seine Fläche nicht homogen gestreckt, vielmehr wechseln Bereiche hoher Streckung, beispielsweise im Randbereich der Kavität mit Bereichen geringerer Streckung ab. Aus einem Folienmaterial mit homogener Foliendicke entsteht so eine verformte Folie in Form eines Aufnahmebehälters mit einer heterogenen Foliendickenverteilung. Diese heterogenen Foliendickenverteilung wird umso ausgeprägter ausfallen, je stärker das ursprüngliche Folienmaterial verformt wird. Die Stärke der Verformung nimmt in der Regel beispielsweise mit der Anzahl der in den Aufnahmebehälter eingeformten Aufnahmekammern oder deren Tiefe zu.

Neben anderen Faktoren bestimmen sowohl die Foliendickenverteilung als auch die absolute Foliendicke die haptischen, optischen und mechanischen Eigenschaften des Folienbeutels. Folienbeutel mit großen Unterschieden in der Foliendicke werden häufig als weniger ansprechend wahrgenommen. Folienbeutel mit geringer minimalen Foliendicke verformen sich leichter unter ihrem Eigengewicht als entsprechende Folienbeutel mit höherer Foliendicke und wirken schlaff. Diese Folienbeutel halten mechanischer Belastung in geringerem Maße stand und lösen sich bei Wasserzutritt zu schnell. Die beiden letztgenannten Eigenschaften sind für Folienbeutel nicht nur im Bereich von Herstellung, Transport und Lagerung relevant, sondern haben insbesondere Auswirkungen auf die Produktsicherheit, beispielsweise bei versehentlicher oraler Aufnahme.

Zur Erhöhung der Homogenität der Wanddicke bei Tiefziehverfahren schlägt die internationale Anmeldung WO 2019/06448 A1 ein Tiefziehverfahren vor, in dessen Verlauf eine flache Folie mit einem Temperaturprofil beaufschlagt wird.

Mit der gleichen Zielsetzung werden in der europäischen Patentanmeldung EP2298536 A2 und der internationalen Patentanmeldung WO 2020/1520441 A1 Heizvorrichtung unter Einsatz von Heizvorrichtungen mit heterogener Temperaturverteilung vorgeschlagen. Die Patentanmeldungen DE2019295A1 und EP0055082A2 offenbaren grundsätzlich eine Vorrichtung nach dem Oberbegriffs des Anspruchs 1.

Diese zuvor beschriebenen Lösungsansätze sind jedoch apparativ aufwändig und eignen sich nur in bedingtem Maße für hohe Durchsätze. Darüber hinaus ist die Einrichtung ebenso wie die Umstellung entsprechender Tiefziehlinien kostenträchtig.

Vor diesem technischen Hintergrund lag der Anmeldung die Aufgabe zugrunde, ein Heizvorrichtung zur Herstellung von Portionseinheiten bereitzustellen, welche bei minimalem apparativem Aufwand und minimalem Einsatz zur Verpackung eingesetzter Filmmaterialien die effiziente Herstellung von Portionseinheiten mit maximaler Stabilität und ansprechender Optik und Haptik ermöglicht.

Der Anmeldungsgegenstand ist eine Heizvorrichtung, nach Anspruch 1, welche zur Erwärmung eines Verpackungsfilms in einem Tiefziehverfahren eingerichtet ist, in dessen Verlauf der erwärmte Verpackungsfilm in die Kavität einer Tiefziehmatrize eingeformt wird, wobei der Oberflächenbereich der Heizvorrichtung, welcher mit dem in die Kavität einzuformenden Filmabschnitt in Kontakt gebracht wird, mindestens eine Vertiefung aufweist, deren Öffnungsfläche 40 bis 95% der Öffnungsfläche der Kavität beträgt.

Die erfindungsgemäße Heizvorrichtung ermöglicht beispielsweise die effiziente Herstellung von Waschmittelportionseinheiten. Diese Waschmittelportionseinheiten zeichnen sich aufgrund der gleichförmigen Dicke des wasserlöslichen Films durch eine hohe mechanische Stabilität bei geringem Verpackungsmitteleinsatz und einer ansprechenden Haptik und Optik aus.

Der die Vertiefung umgebende Oberflächenbereich der Heizvorrichtung ist vorzugsweise plan ausgebildet. Besonders bevorzugte Materialien zur Fertigung der Oberfläche Heizvorrichtung sind Keramik oder Metall, insbesondere Aluminium.

Bevorzugte Heizvorrichtungen weise eine metallische Oberfläche, insbesondere eine metallische Oberfläche auf, welche Aluminium umfasst. Aufgrund ihrer wärmeleitenden Eigenschaften werden metallische Heizvorrichtungsoberflächen bevorzugt, welche zu mindestens 70 Gew.-%, vorzugsweise zu mindestens 90 Gew.-%, besonders bevorzugt zu mindestens 98 Gew.-% und insbesondere vollständig aus Aluminium bestehen.

Die planen Oberflächenbereiche der Heizvorrichtung können zur Steuerung der Wärmeübertragung oder zur Vermeidung von Anhaftungen strukturiert sein. Derart strukturierte Oberflächen weisen beispielsweise sicht- oder spürbare Unebenheiten wie Rillen auf. Die Strukturelemente unterscheiden sich von den Vertiefungen naturgemäß in Hinblick auf ihre Tiefe und ihre Breite. In bevorzugten strukturierten Oberflächenbereichen beträgt die maximale Tiefe der Strukturelemente weniger als 0,5 mm, vorzugsweise weniger als 0,2 mm und insbesondere weniger als 0,1 mm. Die maximale Tiefe entspricht der maximalen Länge einer zur Öffnungsfläche orthogonalen Strecke zwischen einem Punkt auf der Öffnungsfläche und einem Punkt auf der Bodenfläche des Strukturelements.

Die beanspruchten Heizvorrichtungen weisen eine umlaufende Umrandung auf. Die Umrandung schließt den plan ausgebildeten Oberflächenbereich und die in diesem Oberflächenbereich ausgebildete Vertiefung oder die die in diesem Oberflächenbereich ausgebildeten Vertiefungen ein. Vorzugsweise werden von der Umrandung mindestens vier, bevorzugt mindestens acht und insbesondere mindestens sechzehn Vertiefungen umschlossen.

Mittels der Umrandung wird ein über die Heizvorrichtung verbrachter Film von der beheizten Oberfläche beabstandet. Ein Kontakt zwischen Film und Oberfläche der Heizvorrichtung tritt dadurch erst durch gezielte Krafteinwirkung, beispielsweise durch Anlegen eines Unterdrucks zwischen Heizvorrichtungsoberfläche und Film, ein. Im Ergebnis lassen sich die Kontaktzeiten zwischen der beheizten Oberfläche und dem Film auch bei hohen Verfahrensgeschwindigkeiten gezielt steuern. Da bei geringer Umrandungshöhe der beschriebene Beabstandungseffekt in geringerem Maß ausgeprägt ist, während bei hoher Umrandungshöhe die Wirkung des eingesetzten Unterdrucks vermindert wird, beträgt die Höhe der Umrandung vorzugsweise 0,5 bis 2 mm, besonders bevorzugt 0,8 bis 1,2 mm. Eine Umrandungshöhe von 1 mm wird ganz besonders bevorzugt.

Zusammenfassend ist eine bevorzugte Verfahrensvariante dadurch gekennzeichnet, dass der die Vertiefung umgebende Oberflächenbereich der Heizvorrichtung plan ausgebildet und von einer umlaufenden Umrandung mit einer Höhe von 0,5 bis 2 mm, vorzugweise von 0,8 bis 1,2 mm umschlossen ist.

In Bezug auf die angestrebte homogene Filmdehnung hat es sich als vorteilhaft erwiesen, wenn die Öffnungsfläche der mindestens einen Vertiefung kleiner ist als die Öffnungsfläche der Kavität. In bevorzugten Verfahren beträgt die Öffnungsfläche der mindestens einen Vertiefung 50 bis 90% und insbesondere 60 bis 80% der Öffnungsfläche der Kavität.

Für die Erzielung einer homogenen Filmdehnung ist es weiterhin vorteilhaft, den Umriss der Öffnungsfläche der Vertiefung dem Umriss der Öffnungsfläche der Kavität nachzubilden. Als Nachbildung wird die zweidimensionale Form der Öffnungsfläche einer Vertiefung bezeichnet, welche der zweidimensionalen Form der Öffnungsfläche der Kavität beispielsweise in Bezug auf die Anzahl der vorhandenen Ecken gleicht.

Besonders bevorzugt ist es, wenn der Umriss der Öffnungsfläche der Vertiefung aus dem Umriss der Öffnungsfläche der Kavität durch eine Verkleinerung erhalten wird, wobei vorzugsweise Verkleinerungsfaktoren von 0,4 bis 0,95, bevorzugt von 0,5 bis 0,9 und insbesondere von 0,6 bis 0,8 angewendet werden.

Bevorzugte Vertiefungen weisen eine Öffnungsfläche mit einem maximalen Durchmesser von 10 bis 40 mm, vorzugsweise von 20 bis 35 mm auf. Die maximale Tiefe bevorzugter Vertiefungen beträgt 0,5 bis 7 mm, vorzugsweise von 0,8 bis 4 mm. Die maximale Tiefe entspricht der maximalen Länge einer zur Öffnungsfläche orthogonalen Strecke zwischen einem Punkt auf der Öffnungsfläche und einem Punkt auf der Bodenfläche der Vertiefung.

Die Vertiefungen können unterschiedliche Raumformen aufweisen. Bevorzugte Vertiefungen weisen neben dem Rand der Öffnungsfläche höchstens einen weiteren Rand auf. Bevorzugt ist es weiterhin, wenn die Vertiefungen keine zur Öffnungsfläche orthogonalen Seitenflächen aufweisen. Bevorzugt sind vielmehr Vertiefungen, welche ausschließlich durch ihre Öffnungsfläche und eine direkt an die Öffnungsfläche anschließende Bodenfläche begrenzt sind. Besonders bevorzugte Vertiefungen weisen beispielsweise eine halbkugelförmige, gestaucht halbkugelförmige, gestreckt halbkugelförmige oder gestaucht und gestreckt halbkugelförmige Raumform auf. Die Bodenfläche kann abgeflacht sein, beispielsweise in Form eines zur Öffnungsfläche planparallelen Bereichs.

Bevorzugte Vertiefungen sind durch eine von ihrem Rand bis zu ihrem tiefsten Punkt kontinuierlich abfallende Bodenfläche gekennzeichnet. Selbstverständlich kann die Vertiefung mehr als einen tiefsten Punkt aufweisen. Beispielsweise kann die Vertiefung, wie zuvor beschrieben, eine zur Öffnungsfläche anteilsweise planparallele Bodenfläche aufweisen. In einer solchen Ausführungsform weist die Bodenfläche zwischen dem Rand der Vertiefung und dem Rand des planparallelen Bereichs der Bodenfläche ein kontinuierliches Gefälle auf.

Das Gefälle kann linear oder nichtlinear verlaufen. Sowohl das absolute Gefälle als auch dessen relativer Verlauf haben sich als relevant für die erzielte Filmdickenhomogenität erwiesen. Bevorzugte Vertiefungen weisen eine von ihrem Rand bis zu ihrem tiefsten Punkt kontinuierlich abfallende Bodenfläche auf, deren Gefälle auf der kürzesten Strecke vom Rand bis zum tiefsten Punkt zu wenigstens 10%, vorzugsweise zu 30% der Strecke linear verläuft. Als vorteilhaft haben sich beispielsweise Verfahrensvarianten unter Einsatz von Vertiefungen erwiesen, welche eine von ihrem Rand bis zu ihrem tiefsten Punkt kontinuierlich abfallende Bodenfläche aufweisen, deren Gefälle auf der kürzesten Strecke vom Rand bis zum tiefsten Punkt von 10 bis 90%, vorzugsweise von 30 bis 80% der Strecke linear verläuft.

Bevorzugt ist es, wenn die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt sich an mindestens einem Punkt ändert.

Vorzugsweise weist die Vertiefung eine von ihrem Rand bis zu ihrem tiefsten Punkt kontinuierlich abfallende Bodenfläche auf, deren Gefälle auf der kürzesten Strecke vom Rand bis zum tiefsten Punkt über die gesamte Strecke 10 bis 50%, vorzugsweise 15 bis 40% beträgt.

Das Volumen bevorzugter Vertiefungen beträgt 1 bis 8 ml, vorzugweise von 1 bis 6 ml.

Das Verhältnis der maximalen Tiefe der Vertiefung zur maximalen Tiefe der Kavität beträgt vorzugsweise 2:3 bis 1 zu 5, besonders bevorzugt 1:2 bis 1:4. Ein entsprechendes Verhältnis hat sich sowohl im Hinblick auf die Homogenität der Foliendickenverteilung als auch in Bezug auf die Prozessführung als vorteilhaft erwiesen.

Die erfindungsgemäße Heizvorrichtung eignet sich insbesondere zur Herstellung von Portionseinheiten mit komplexen Geometrien oder für Portionseinheiten mit mehr als einer Aufnahmekammer.

Zwischen zwei benachbarten, einer Portionseinheit zugehörigen Vertiefungen ist die Oberfläche der Heizvorrichtung vorzugsweise plan ausgebildet. Der minimale Abstand zwischen zwei derartigen benachbarten Vertiefungen beträgt vorzugsweise 0,5 bis 4 mm vorzugsweise 1 bis 3 mm. Die Vertiefungen können sich hinsichtlich ihrer maximalen Tiefe unterscheiden.

In einer bevorzugten Ausführungsform sind die zwei, drei oder vier Aufnahmekammern und folglich auch die den Aufnahmekammern zugeordneten Vertiefungen in der Heizvorrichtung einander wenigstens anteilsweise umschließend angeordnet. Bevorzugte Heizvorrichtungen weisen zwei, vorzugsweise mindestens drei und insbesondere mindestens vier Vertiefungen auf, deren eine Vertiefung einen Mittelpunkt bildet, um den die verbleibenden Vertiefungen rotationssymmetrisch angeordnet sind.

Wie eingangs ausgeführt, weist die Heizvorrichtung vorzugsweise eine metallische Oberfläche auf. Diese vorzugsweise metallische Oberfläche weist wiederum Vertiefungen auf, welche bei minimalem apparativem Aufwand und minimalem Einsatz zur Verpackung eingesetzter Filmmaterialien die effiziente Herstellung von Portionseinheiten mit maximaler Stabilität und ansprechender Optik und Haptik ermöglichen.

Diese vorteilhaften Eigenschaften des erfindungsgemäßen Verfahrens lassen sich durch eine wenigstens anteilsweise Beschichtung der Oberfläche der Heizvorrichtung verstärken. Besonders vorteilhaft ist es dabei, die Oberfläche der Heizvorrichtung im Bereich der Vertiefung wenigstens anteilsweise beschichtet ist. Eine entsprechende Beschichtung beeinflusst, wie die in der Oberfläche befindlichen Vertiefungen, die Filmdickenverteilung der hergestellten Aufnahmebehälter. Als vorteilhaft hat es sich in diesem Zusammenhang erweisen, die Oberfläche der Heizvorrichtung im Bereich der Vertiefung(en) vollflächig zu beschichten.

Die Beschichtung kann sich auf die Oberfläche der Heizvorrichtung im Bereich der Vertiefung(en) und den die Vertiefung umgebenden Randbereich erstrecken.

Die Beschichtung der Heizvorrichtungsoberfläche im Bereich der Vertiefungen führt notwendigerweise zu einer wenigstens anteilsweisen Befüllung des Vertiefungsvolumens. In Varianten des erfindungsgemäßen Verfahrens ist die mindestens eine Vertiefung zu mindestens 60 Vol.-%, vorzugsweise zu mindestens 80 Vol.-% und insbesondere vollständig mit einem Beschichtungsmaterial verfüllt.

Die Beschichtung kann 5 bis 80 %, vorzugsweise 10 bis 70% und insbesondere 20 bis 50% des Oberflächenbereichs der Heizvorrichtung, welcher mit dem Film in Kontakt gebracht wird, bedecken.

Als Material für die Beschichtung eignen sich Beschichtungsmaterialien aus der Gruppe der Metalle und der Polymere, insbesondere der Gummis und der Silikone. Die Beschichtung mit Silikonen ist aufgrund ihrer Wärmebeständigkeit und Formbarkeit besonders bevorzugt.

Bevorzugte Beschichtungsmittel weisen eine geringere Wärmeleitfähigkeit und/oder einen geringeren Wärmeübergangskoeffizienten auf als die Heizvorrichtungsoberfläche.

Die Dicke der Beschichtung beträgt vorzugsweise 100 bis 4000µm, besonders bevorzugt 200 bis 2000 µm.

Etwaige Beschichtungen können mit der Grundfläche in unterschiedlicher Weise verbunden werden. So eignen sich Haftverbindungen zur Ausbildung einer anhaltenden und zeitlich ortsstabilen Bindung zwischen der Heizvorrichtungsoberfläche und dem Beschichtungsmittel. Klemm- oder Steckverbindungen werden wiederum vorzugsweise in den Fällen eingesetzt, in denen eine schnelle Austauschbarkeit der Beschichtungsmittel, beispielsweise aufgrund von Verschleiß oder zur Änderung der Verfahrensparameter angestrebt wird.

Zur Verringerung der Prozessdauer und zur Sicherstellung eines reproduzierbaren Kontakts zwischen einem Verpackungsfilm und der Oberfläche der Heizvorrichtung wird der Film vorzugsweise mittels eines Unterdrucks mit der Heizvorrichtung in Kontakt gebracht. Weiterhin ist es bevorzugt, den Kontakt zwischen dem Film und der Heizvorrichtung durch Beibehaltung eines Unterdrucks aufrecht zu erhalten.

Zur Unterstützung der gleichmäßigen Ausbildung eines Unterdrucks zwischen Heizvorrichtung und wasserlöslichem Film weist die Oberfläche der Heizvorrichtung vorzugsweise Bohrungen auf, mittels derer zwischen Heizvorrichtung und Film befindliches Gas abgeführt werden kann. Diese Bohrungen befinden sich vorzugsweise zu 60%, bevorzugt zu 90%, insbesondere zu 95% und ganz besonders bevorzugt vollständig außerhalb der Vertiefungen.

Aus Gründen der Prozesseffizienz ist es bevorzugt, wenn die Heizvorrichtung mindestens vier, vorzugsweise mindestens sechzehn und insbesondere vierundsechzig Vertiefungen aufweist.

Ein weiterer Gegenstand der vorliegenden Anmeldung ist eine Tiefziehvorrichtung, umfassend eine Heizvorrichtung nach einem der vorherigen Punkte.

Zur Steigerung der Verfahrenseffizienz und zur Steigerung der Filmdickenhomogenität hat es sich als vorteilhaft erwiesen, wenn die Tiefziehvorrichtung eine Tiefziehmatrize umfasst, die unterhalb der Heizvorrichtung angeordnet ist. Der Abstand zwischen der Oberfläche der Heizvorrichtung und der Oberfläche der Tiefziehmatrize beträgt vorzugsweise weniger als 10 mm, bevorzugt weniger als 5 mm, insbesondere 0,1 bis 2 mm und besonders bevorzugt 0,2 bis 1 mm.

Weiterhin ist es aus Gründen der Verfahrenseffizienz bevorzugt, die Heizvorrichtung und die Tiefziehmatrize derart anzuordnen, dass die Kavität der Tiefziehmatrize, in welche ein Teilbereich des erwärmten Verpackungsfilms eingeformt wird, sich gegenüber der Öffnungsfläche jener Vertiefung der Heizvorrichtung befindet, welche dieser Teilbereich des Verpackungsfilms bei der Erwärmung durch die Heizvorrichtung bedeckt.

Durch diese Anmeldung werden u.a. die folgenden Gegenstände bereitgestellt:
1. Tiefziehvorrichtung, umfassend eine Heizvorrichtung, welche zur Erwärmung eines Verpackungsfilms in einem Tiefziehverfahren eingerichtet ist, in dessen Verlauf der erwärmte Verpackungsfilm in die Kavität einer Tiefziehmatrize eingeformt wird, wobei der Oberflächenbereich der Heizvorrichtung, welcher mit dem in die Kavität einzuformenden Filmabschnitt in Kontakt gebracht wird, mindestens eine Vertiefung aufweist, deren Öffnungsfläche 40 bis 95% der Öffnungsfläche der Kavität beträgt; dadurch gekennzeichnet, dass der die Vertiefung umgebende Oberflächenbereich der Heizvorrichtung plan ausgebildet ist, welcher von einer umlaufenden Umrandung mit einer Höhe von 0,5 bis 2 mm umschlossen ist.
2. Heizvorrichtung nach einem der vorherigen Punkte, wobei der die Vertiefung umgebende Oberflächenbereich der Heizvorrichtung eine strukturierte Oberfläche aufweist. (strukturierte Oberfläche = sicht- oder spürbare Unebenheiten wie Rillen)
3. Heizvorrichtung nach einem der vorherigen Punkte, wobei der die Vertiefung umgebende Oberflächenbereich der Heizvorrichtung von einer umlaufenden Umrandung mit einer Höhe von 0,8 bis 1,2 mm umschlossen ist.
4. Heizvorrichtung nach einem der vorherigen Punkte, wobei die Öffnungsfläche der Vertiefung 50 bis 90% und insbesondere 60 bis 80% der Öffnungsfläche der Kavität beträgt.
5. Heizvorrichtung nach einem der vorherigen Punkte, wobei der Umriss der Öffnungsfläche der Vertiefung dem Umriss der Öffnungsfläche der Kavität nachgebildet ist.
6. Heizvorrichtung nach einem der vorherigen Punkte, wobei der Umriss der Öffnungsfläche der Vertiefung aus dem Umriss der Öffnungsfläche der Kavität durch einen Verkleinerungsfaktor von 0,4 bis 0,95, vorzugsweise von 0,5 bis 0,9 und insbesondere von 0,6 bis 0,8 erhalten wird.
7. Heizvorrichtung nach einem der vorherigen Punkte, wobei die Vertiefung eine Öffnungsfläche mit einem maximalen Durchmesser von 10 bis 40 mm, vorzugsweise von 20 bis 35 mm aufweist.
8. Heizvorrichtung nach einem der vorherigen Punkte, wobei die Vertiefung eine maximale Tiefe (gemessen als orthogonaler Abstand zwischen der Öffnungsfläche und der Bodenfläche der Vertiefung) von 0,5 bis 7 mm, vorzugsweise von 0,8 bis 4 mm aufweist.
9. Heizvorrichtung nach einem der vorherigen Punkte, wobei die Vertiefung eine halbkugelförmige, gestaucht halbkugelförmige, gestreckt halbkugelförmige oder gestaucht und gestreckt halkugelförmige Raumform aufweist.
10. Heizvorrichtung nach einem der vorherigen Punkte, wobei die die Bodenfläche der Vertiefung abgeflacht ist und vorzugsweise planparallel zur Öffnungsfläche verläuft.
11. Heizvorrichtung nach einem der vorherigen Punkte, wobei die Vertiefung eine von ihrem Rand bis zu ihrem tiefsten Punkt kontinuierlich abfallende Bodenfläche aufweist.
12. Heizvorrichtung nach einem der vorherigen Punkte, wobei die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt zu wenigstens 10%, vorzugsweise zu 30% der Strecke linear verläuft.
13. Heizvorrichtung nach einem der vorherigen Punkte, wobei die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt von 10 bis 90%, vorzugsweise von 30 bis 80% der Strecke linear verläuft.
14. Heizvorrichtung nach einem der vorherigen Punkte, wobei die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt sich an mindestens einem Punkt ändert.
15. Heizvorrichtung nach einem der vorherigen Punkte, wobei die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt über die gesamte Strecke 10 bis 50%, vorzugsweise 15 bis 40% beträgt.
16. Heizvorrichtung nach einem der vorherigen Punkte, wobei die Vertiefung ein Volumen von 1 bis 8 ml, vorzugweise von 1 bis 6 ml aufweist.
17. Das Verhältnis der maximalen Tiefe der Vertiefung zur maximalen Tiefe der Kavität beträgt vorzugsweise 2:3 bis 1 zu 5, besonders bevorzugt 1:2 bis 1:4.
18. Heizvorrichtung nach einem der vorherigen Punkte, wobei die Heizvorrichtung mindestens zwei Vertiefungen aufweist, welche sich hinsichtlich ihrer maximalen Tiefe unterscheiden.
19. Heizvorrichtung nach Punkt 18, wobei die Oberfläche der Heizvorrichtung zwischen den Vertiefungen plan ausgebildet ist.
20. Heizvorrichtung nach einem der Punkte 18 oder 19, wobei die Oberfläche der Heizvorrichtung zwischen den Vertiefungen plan ausgebildet ist und der minimale Abstand zwischen zwei Vertiefungen 0,5 bis 4 mm vorzugsweise 1 bis 3 mm beträgt.
21. Heizvorrichtung nach einem der vorherigen Punkte, wobei die die Heizvorrichtung mindestens zwei, vorzugsweise mindestens drei und insbesondere mindestens vier Vertiefungen aufweist, welches einander wenigstens anteilsweise umschließen.
22. Heizvorrichtung nach einem der vorherigen Punkte, wobei die Heizvorrichtung mindestens zwei, vorzugsweise mindestens drei und insbesondere mindestens vier Vertiefungen aufweist, deren eine Vertiefung einen Mittelpunkt bildet, um den die verbleibenden Vertiefungen rotationssymmetrisch angeordnet sind.
23. Heizvorrichtung nach einem der vorherigen Punkte, wobei die Heizvorrichtung eine metallische Oberfläche aufweist.
24. Heizvorrichtung nach einem der vorherigen Punkte, wobei die Heizvorrichtung eine metallische Oberfläche aufweist, welche Aluminium umfasst.
25. Heizvorrichtung nach einem der vorherigen Punkte, wobei die Heizvorrichtung eine metallische Oberfläche aufweist, welche zu mindestens 70 Gew.-%, vorzugsweise zu mindestens 90 Gew.-%, besonders bevorzugt zu mindestens 98 Gew.-% und insbesondere vollständig aus Aluminium besteht.
26. Heizvorrichtung nach einem der vorherigen Punkte, wobei die Oberfläche der Heizvorrichtung wenigstens anteilsweise beschichtet ist.
27. Heizvorrichtung nach einem der vorherigen Punkte, wobei die Oberfläche der Heizvorrichtung im Bereich der Vertiefung wenigstens anteilsweise beschichtet ist.
28. Heizvorrichtung nach einem der vorherigen Punkte, wobei die Oberfläche der Heizvorrichtung im Bereich der Vertiefung(en) vollflächig beschichtet ist.
29. Heizvorrichtung nach einem der vorherigen Punkte, wobei die Oberfläche der Heizvorrichtung im Bereich der Vertiefung(en) als auch im Bereich des die Vertiefung umgebenden Randbereichs beschichtet ist.
30. Heizvorrichtung nach einem der vorherigen Punkte, wobei die mindestens eine Vertiefung zu mindestens 60 Vol.-%, vorzugsweise zu mindestens 80 Vol.-% und insbesondere vollständig mit dem Beschichtungsmaterial verfüllt ist.
31. Heizvorrichtung nach einem der vorherigen Punkte, wobei die Oberfläche der Heizvorrichtung wenigstens anteilsweise beschichtet ist und die Beschichtung 5 bis 80 %, vorzugsweise 10 bis 70% und insbesondere 20 bis 50% des Oberflächenbereichs der Heizvorrichtung, welcher mit dem Film in Kontakt gebracht wird, bedeckt.
32. Heizvorrichtung nach einem der Punkte 26 bis 29, wobei das Beschichtungsmaterial ausgewählt ist aus der Gruppe der Metalle.
33. Heizvorrichtung nach einem der Punkte 26 bis 29, wobei das Beschichtungsmaterial ausgewählt ist aus der Gruppe der Polymere.
34. Heizvorrichtung nach einem der Punkte 26 bis 29, wobei das Beschichtungsmaterial ausgewählt ist aus der Gruppe der Silikone.
35. Heizvorrichtung nach einem der Punkte 26 bis 29, wobei das Beschichtungsmaterial ausgewählt ist aus der Gruppe der Gummis.
36. Heizvorrichtung nach einem der Punkte 26 bis 35, wobei die Beschichtung eine Dicke von 100 bis 4000µm, vorzugsweise von 200 bis 2000 µm aufweist.
37. Heizvorrichtung nach einem der Punkte 26 bis 36, wobei die Beschichtung eine geringe Wärmeleitfähigkeit aufweist als die metallische Grundfläche.
38. Heizvorrichtung nach einem der Punkte 26 bis 27 wobei die Beschichtung einen geringen Wärmeübergangskoeffizienten aufweist als die metallische Grundfläche.
39. Heizvorrichtung nach einem der Punkte 26 bis 38, wobei die Beschichtung mit der Grundfläche mittels einer Haftverbindung verbunden ist.
40. Heizvorrichtung nach einem der Punkte 26 bis 38, wobei die Beschichtung mit der Grundfläche mittels einer Klemmverbindung verbunden ist.
41. Heizvorrichtung nach einem der Punkte 26 bis 38, wobei die Beschichtung mit der Grundfläche mittels einer Steckverbindung verbunden ist.
42. Heizvorrichtung nach einem der vorherigen Punkte, wobei die Oberfläche der Heizvorrichtung Bohrungen aufweist, mittels derer zwischen Heizvorrichtung und Film befindliches Gas abgeführt werden kann.
43. Heizvorrichtung nach einem der vorherigen Punkte, wobei sich die Bohrungen zu 60%, vorzugsweise zu 90%, insbesondere zu 95% und ganz besonders bevorzugt vollständig außerhalb der Vertiefungen befinden.
44. Heizvorrichtung nach einem der vorherigen Punkte, wobei die Heizvorrichtung mindestens vier, vorzugsweise mindestens sechzehn und insbesondere vierundsechzig Vertiefungen aufweist.
45. Tiefziehvorrichtung, umfassend eine Heizvorrichtung nach einem der vorherigen Punkte.
46. Tiefziehvorrichtung nach Punkt 45, wobei die Tiefziehvorrichtung eine Tiefziehmatrize umfasst, die unterhalb der Heizvorrichtung angeordnet ist.
47. Tiefziehvorrichtung nach einem der vorherigen Punkte, wobei die Tiefziehvorrichtung eine Tiefziehmatrize umfasst und der Abstand zwischen der Oberfläche der Heizvorrichtung und der Oberfläche der Tiefziehmatrize weniger als 10 mm, vorzugsweise weniger als 5 mm und insbesondere zwischen 0,1 und 2 mm, besonders bevorzugt zwischen 0,2 und 1 mm beträgt.
48. Tiefziehvorrichtung nach einem der vorherigen Punkte, wobei die Tiefziehmatrize derart angeordnet ist, dass die Kavität der Tiefziehmatrize, in welche ein Teilbereich des erwärmten Verpackungsfilms eingeformt wird, sich gegenüber der Öffnungsfläche jener Vertiefung der Heizvorrichtung befindet, welche dieser Teilbereich des Verpackungsfilms bei der Erwärmung durch die Heizvorrichtung bedeckt.

### Beispiele

Ein wasserlöslicher Polyvinylalkoholfilm (Dicke 88µm) wurde mittels variierender Heizvorrichtungen erwärmt und nachfolgend durch Einwirkung eines Unterdrucks zu einer tropfenförmigen Aufnahmekammer umgeformt. Die Temperatur der Heizplatte betrug jeweils 120°C. Mit Ausnahme der eingesetzten Heizvorrichtung waren die in den Versuchen eingesetzten Verfahrensparameter identisch.

Die folgenden beiden Heizvorrichtungen wurden eingesetzt:
Heizvorrichtung 1: vollständig plane Heizplatte (Aluminium)
Heizvorrichtung 2: Heizplatte (Aluminium) mit einer Vertiefung (maximale Tiefe 1mm) deren Umriss der tropfenförmigen Aufnahmekammer mit einem Verkleinerungsfaktor von 0,8 nachempfunden ist

Im Anschluss an den Tiefziehprozess wurde die Filmdicke in den Aufnahmekammern durch optische Verfahren (Film Thickness Analyzer) entlang eines zur Längsachse des Tropfens orthogonalen Querschnitts ermittelt. Die Messung der Filmdicke erfolgte entlang des Querschnitts an jeweils neun äquidistant voneinander entfernten Messpunkten.

### Filmdicke ([µm])

| | 1 | 2 | 3 | 4 | 5 | 6 | 7 | 8 | 9 |
|---|---|---|---|---|---|---|---|---|---|
| Heizvorrichtung 1 | 34,6 | 29,6 | 27,1 | 24,4 | 25,9 | 24,7 | 24,1 | 27,1 | 33,3 |
| Heizvorrichtung 2 | 36,6 | 34,1 | 32,0 | 35,0 | 35,0 | 34,6 | 25,9 | 33,7 | 43,8 |

Die mittels der mit Vertiefungen versehenen Heizplatte erhaltenen Aufnahmekammern zeichnen sich bei identischen Ausgangsfilm durch eine höhere Filmdicke aus. Portionseinheiten, welche durch die Befüllung mit einem Flüssigwaschmittel und nachfolgende Versiegelung mittels eines zweiten wasserlöslichen Films erhalten wurden, wiesen eine verbesserte mechanische Stabilität auf.

## Patentansprüche

1. Tiefziehvorrichtung, umfassend eine Heizvorrichtung, welche zur Erwärmung eines Verpackungsfilms in einem Tiefziehverfahren eingerichtet ist, in dessen Verlauf der erwärmte Verpackungsfilm in die Kavität einer Tiefziehmatrize eingeformt wird, wobei der Oberflächenbereich der Heizvorrichtung, welcher mit dem in die Kavität einzuformenden Filmabschnitt in Kontakt gebracht wird, mindestens eine Vertiefung aufweist, deren Öffnungsfläche 40 bis 95% der Öffnungsfläche der Kavität beträgt; **dadurch gekennzeichnet, dass**
der die Vertiefung umgebende Oberflächenbereich der Heizvorrichtung plan ausgebildet ist, welcher von einer umlaufenden Umrandung mit einer Höhe von 0,5 bis 2 mm umschlossen ist.

2. Tiefziehvorrichtung nach Anspruch 1, wobei der die Vertiefung umgebende Oberflächenbereich der Heizvorrichtung von einer umlaufenden Umrandung mit einer Höhe von 0,8 bis 1,2 mm umschlossen ist.

3. Tiefziehvorrichtung nach einem der vorherigen Ansprüche, wobei der Umriss der Öffnungsfläche der Vertiefung dem Umriss der Öffnungsfläche der Kavität nachgebildet ist.

4. Tiefziehvorrichtung nach einem der vorherigen Ansprüche, wobei der Umriss der Öffnungsfläche der Vertiefung aus dem Umriss der Öffnungsfläche der Kavität durch einen Verkleinerungsfaktor von 0,4 bis 0,95, vorzugsweise von 0,5 bis 0,9 und insbesondere von 0,6 bis 0,8 erhalten wird.

5. Tiefziehvorrichtung nach einem der vorherigen Ansprüche, wobei die Vertiefung eine halbkugelförmige, gestaucht halbkugelförmige, gestreckt halbkugelförmige oder gestaucht und gestreckt halkugelförmige Raumform aufweist.

6. Tiefziehvorrichtung nach einem der vorherigen Ansprüche, wobei die Vertiefung eine von ihrem Rand bis zu ihrem tiefsten Punkt kontinuierlich abfallende Bodenfläche aufweist.

7. Tiefziehvorrichtung nach einem der vorherigen Ansprüche, wobei die Vertiefung ein Volumen von 1 bis 8 ml, vorzugweise von 1 bis 6 ml aufweist.

8. Tiefziehvorrichtung nach einem der vorherigen Ansprüche, wobei die Heizvorrichtung mindestens zwei Vertiefungen aufweist, welche sich hinsichtlich ihrer maximalen Tiefe unterscheiden.

9. Tiefziehvorrichtung nach einem der vorherigen Ansprüche, wobei die die Heizvorrichtung mindestens zwei, vorzugsweise mindestens drei und insbesondere mindestens vier Vertiefungen aufweist, welches einander wenigstens anteilsweise umschließen.

10. Tiefziehvorrichtung nach einem der vorherigen Ansprüche, wobei die Heizvorrichtung mindestens zwei, vorzugsweise mindestens drei und insbesondere mindestens vier Vertiefungen aufweist, deren eine Vertiefung einen Mittelpunkt bildet, um den die verbleibenden Vertiefungen rotationssymmetrisch angeordnet sind.

11. Tiefziehvorrichtung nach einem der vorherigen Ansprüche, wobei die Oberfläche der Heizvorrichtung wenigstens anteilsweise beschichtet ist.

12. Tiefziehvorrichtung nach einem der vorherigen Ansprüche, wobei die Oberfläche der Heizvorrichtung im Bereich der Vertiefung(en) vollflächig beschichtet ist.

13. Tiefziehvorrichtung nach einem der Ansprüche 1-12, wobei die Tiefziehmatrize unterhalb der Heizvorrichtung angeordnet ist.

14. Tiefziehvorrichtung nach einem der Ansprüche 1-13, wobei der Abstand zwischen der Oberfläche der Heizvorrichtung und der Oberfläche der Tiefziehmatrize weniger als 10 mm, vorzugsweise weniger als 5 mm und insbesondere zwischen 0,1 und 2 mm, besonders bevorzugt zwischen 0,2 und 1 mm beträgt.

## Claims

1. Thermoforming device comprising a heating device which is designed to heat a packaging film in a thermoforming process, during which the heated packaging film is molded into the cavity of a thermoforming die, wherein the surface area of the heating device which is brought into contact with the film section to be molded into the cavity has at least one recess whose opening area is 40 to 95% of the opening area of the cavity; **characterized in that**
the surface area of the heating device surrounding the recess is flat and is enclosed by a circumferential rim with a height of 0.5 to 2 mm.

2. Thermoforming device according to claim 1, wherein the surface area of the heating device surrounding the recess is enclosed by a circumferential border with a height of 0.8 to 1.2 mm.

3. Thermoforming device according to one of the previous claims, wherein the outline of the opening area of the recess is modeled on the outline of the opening area of the cavity.

4. Thermoforming device according to one of the previous claims, wherein the outline of the opening area of the recess is obtained from the outline of the opening area of the cavity by a reduction factor of 0.4 to 0.95, preferably of 0.5 to 0.9 and in particular of 0.6 to 0.8.

5. Thermoforming device according to one of the previous claims, wherein the recess has a hemispherical, compressed hemispherical, elongated hemispherical or compressed and elongated hemispherical spatial shape.

6. Thermoforming device according to one of the previous claims, wherein the recess has a bottom surface that slopes continuously from its edge to its deepest point.

7. Thermoforming device according to one of the previous claims, wherein the recess has a volume of 1 to 8 ml, preferably 1 to 6 ml.

8. Thermoforming device according to one of the previous claims, wherein the heating device has at least two recesses which differ in terms of their maximum depth.

9. Thermoforming device according to one of the previous claims, wherein the heating device has at least two, preferably at least three, and in particular at least four recesses, which at least partially enclose each other.

10. Thermoforming device according to one of the previous claims, wherein the heating device has at least two, preferably at least three, and in particular at least four recesses, one of which forms a center point around which the remaining recesses are arranged in a rotationally symmetrical manner.

11. Thermoforming device according to one of the previous claims, wherein the surface of the heating device is at least partially coated.

12. Thermoforming device according to one of the previous claims, wherein the surface of the heating device is coated over its entire area in the region of the recess(es).

13. Thermoforming device according to one of claims 1-12, wherein the thermoforming die is arranged below the heating device.

14. Thermoforming device according to one of claims 1-13, wherein the distance between the surface of the heating device and the surface of the thermoforming die is less than 10 mm, preferably less than 5 mm and in particular between 0.1 and 2 mm, particularly preferably between 0.2 and 1 mm.

## Revendications

1. Dispositif d'emboutissage comprenant un dispositif de chauffage qui est conçu pour chauffer un film d'emballage dans un procédé d'emboutissage au cours duquel le film d'emballage chauffé est formé dans la cavité d'une matrice d'emboutissage, la zone de surface du dispositif de chauffage qui est mise en contact avec la partie du film à former dans la cavité présente au moins un renfoncement dont la surface d'ouverture représente 40 à 95 % de la surface d'ouverture de la cavité ; **caractérisé en ce que**
la zone superficielle du dispositif de chauffage entourant le renfoncement est de forme plane et est entourée d'un rebord périphérique d'une hauteur comprise entre 0,5 et 2 mm.

2. Dispositif d'emboutissage profond selon la revendication 1, dans lequel la zone de surface du dispositif de chauffage entourant le renfoncement est entourée d'un rebord périphérique d'une hauteur de 0,8 à 1,2 mm.

3. Dispositif d'emboutissage selon l'une des revendications précédentes, dans lequel le contour de la surface d'ouverture de la cavité est reproduit à partir du contour de la surface d'ouverture de la cavité.

4. Dispositif d'emboutissage selon l'une des revendications précédentes, dans lequel le contour de la surface d'ouverture du renfoncement est obtenu à partir du contour de la surface d'ouverture de la cavité par un facteur de réduction de 0,4 à 0,95, de préférence de 0,5 à 0,9 et en particulier de 0,6 à 0,8.

5. Dispositif d'emboutissage selon l'une des revendications précédentes, dans lequel le renfoncement présente une forme hémisphérique, hémisphérique comprimée, hémisphérique allongée ou hémisphérique comprimée et allongée.

6. Dispositif d'emboutissage selon l'une des revendications précédentes, dans lequel le renfoncement présente une surface de fond qui descend de manière continue depuis son bord jusqu'à son point le plus profond.

7. Dispositif d'emboutissage selon l'une des revendications précédentes, dans lequel le renfoncement présente un volume de 1 à 8 ml, de préférence de 1 à 6 ml.

8. Dispositif d'emboutissage selon l'une des revendications précédentes, dans lequel le dispositif de chauffage présente au moins deux cavités qui diffèrent en termes de profondeur maximale.

9. Dispositif d'emboutissage selon l'une des revendications précédentes, dans lequel le dispositif de chauffage présente au moins deux, de préférence au moins trois et en particulier au moins quatre cavités qui s'entourent au moins partiellement les unes les autres.

10. Dispositif d'emboutissage selon l'une des revendications précédentes, dans lequel le dispositif de chauffage présente au moins deux, de préférence au moins trois et en particulier au moins quatre renfoncements, dont l'un forme un centre autour duquel les renfoncements restants sont disposés de manière symétrique en rotation.

11. Dispositif d'emboutissage selon l'une des revendications précédentes, la surface du dispositif de chauffage étant au moins partiellement revêtue.

12. Dispositif d'emboutissage selon l'une des revendications précédentes, dans lequel la surface du dispositif de chauffage est entièrement revêtue dans la zone du ou des renfoncements.

13. Dispositif d'emboutissage selon l'une des revendications 1 à 12, dans lequel la matrice d'emboutissage est disposée sous le dispositif de chauffage.

14. Dispositif d'emboutissage selon l'une des revendications 1 à 13, dans lequel la distance entre la surface du dispositif de chauffage et la surface de la matrice d'emboutissage est inférieure à 10 mm, de préférence inférieure à 5 mm et en particulier comprise entre 0,1 et 2 mm, de manière particulièrement préférée entre 0,2 et 1 mm.
